Europäisches Patentamt

European Patent Office

Office européen des brevets

(11) Veröffentlichungsnummer: **0 172 991**
A2

# EUROPÄISCHE PATENTANMELDUNG

(21) Anmeldenummer: 85104904.9

(22) Anmeldetag: 23.04.85

(51) Int. Cl.⁴: **H 04 N 9/83**
// H04N7/087

(30) Priorität: 23.08.84 DE 3431006

(43) Veröffentlichungstag der Anmeldung: 05.03.86
Patentblatt 86/10

(84) Benannte Vertragsstaaten: **DE FR GB IT**

(71) Anmelder: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Opelt, Christian, Tannenstrasse 12, D-8501 Veitsbronn (DE)**

(54) **Verfahren und Einrichtung zur Aufzeichnung und Wiedergabe von Farbvideosignalen mit Datenzeilen.**

(57) Eine Aufzeichnung von Farbvideosignalen mit Datenzeilen, wobei die obere Grenzfrequenz der digitalen Datensignale innerhalb der Datenzeilen die durch frequenzbandbegrenzende Einrichtungen bestimmte Grenzfrequenz der Luminanzanteile des Farbvideosignals überschreitet, auf Heimvideorecordern wird dadurch ermöglicht, dass der für die Frequenzmodulation des Luminanzsignals vorgesehene Hubbereich so gewählt wird, daß die Momentanfrequenz für den Weißpegel größer ist als die obere Grenzfrequenz der digitalen Signale, daß die frequenzbandbegrenzenden Einrichtungen im Luminanzkanal für die Zeit, in der die digitalen Datensignale eintreffen, auf eine höhere Durchlaßbandbreite umgeschaltet werden, und daß der Chrominanzkanal für die Zeit, in der die digitalen Datensignale eintreffen, gesperrt wird.

VERFAHREN UND EINRICHTUNG ZUR AUFZEICHNUNG UND
WIEDERGABE VON FARBVIDEOSIGNALEN MIT DATENZEILEN

## BESCHREIBUNG

Die vorliegende Erfindung betrifft ein Verfahren zur Aufzeichnung und Wiedergabe von Farbvideosignalen mit Datenzeilen,
wobei die obere Grenzfrequenz der digitalen Datensignale
innerhalb der Datenzeilen die durch frequenzbandbegrenzende
Einrichtungen bestimmte Grenzfrequenz der Luminanzanteile
der Farbvideosignale überschreitet, wobei die Luminanzanteile
der Farbvideosignale sowie die digitalen Datensignale frequenzmoduliert aufgezeichnet werden.

Es ist seit mehreren Jahren bekannt, in bestimmten Zeilen
der vertikalen Austastlücke eines Farbvideosignals digitale
Signale, insbesondere Videotextinformation, zu übertragen.
Diese Information kann mit Hilfe einer geeigneten empfängerseitigen Elektronik auf einem Bildschirm dargestellt werden
und dient beispielsweise als Zusatzinformation zum gerade
empfangenen Fernsehprogramm. Dies ist u. a. für Gehörgeschädigte von großer Bedeutung.

Alle derzeitigen Heimvideorecorder arbeiten bei der magnetischen Aufzeichnung von Farbvideosignalen nach dem sogenannten "Colour-Under-Verfahren". Dabei werden zur Aufzeichnung des Farbvideosignals das Luminanzsignal und das Chrominanzsignal aus dem Farbvideosignal abgetrennt und diese Anteile getrennt verarbeitet.

Die Abtrennung des Luminanzsignals aus dem Farbvideosignal erfolgt mittels eines Tiefpaßfilters mit einer oberen Grenzfrequenz von etwa 3 MHz. Das Ausgangssignal des Tiefpaßfilters wird einer Verzögerungsstufe zugeführt, deren Aufgabe darin besteht, die Signallaufzeit im Luminanzkanal an die Signallaufzeit im Chrominanzkanal anzupassen. Vom Ausgang der Verzögerungsstufe gelangt das Luminanzsignal an einen Frequenzmodulator und wird dort einem Träger aufmoduliert, dessen Hubbereich beispielsweise zwischen 3,8 und 4,8 MHz liegt. Das frequenzmodulierte Luminanzsignal wird bei den meisten Heimvideorecordern über ein Hochpaßfilter, das unerwünschte Anteile ausfiltert, einer Additionsstufe zugeführt, und dort mit dem Ausgangssignal des Chrominanzkanals vereinigt.

Die Abtrennung des Chrominanzsignals aus dem Farbvideosignal erfolgt mittels eines Bandpasses. In einer darauffolgenden Chrominanzsignalverarbeitungsschaltung wird das Chrominanzsignal in einen unterhalb des trägerfrequenten Luminanzsignalbereichs liegenden Frequenzbereich frequenzumgesetzt. Dieses frequenzumgesetzte Chrominanzsignal wird der Additionsstufe zur Vereinigung mit dem frequenzmodulierten Luminanzsignal zugeführt. Das Ausgangssignal der Additionsstufe schließlich gelangt zu den Aufzeichnungsköpfen und wird von diesen auf Magnetband aufgezeichnet.

Eine Aufzeichnung der digitalen Signale, insbesondere Videotextinformationen, die eine Bandbreite von etwa 5 MHz aufweisen, ist mit den oben beschriebenen Heimvideorecordern nicht möglich, da das Luminanzsignal wegen der Gefahr der Intermodulation mit dem Chrominanzsignal bei ca. 3 MHz tiefpaßgefiltert werden muß und da wegen der maximal möglichen Aufzeichnungsfrequenz der Hubbereich nicht beliebig nach oben verschoben werden kann.

Aus der EP-OS 0 065 378 ist ein Verfahren gemäß Oberbegriff des Anspruchs 1 bekannt, bei dem zur Aufzeichnung der Videotextsignale die Videotextsignale vom Videosignal getrennt und zeitlich expandiert werden, um eine verringerte Bitrate zu erhalten, und dann dem Videosignal wieder überlagert werden, um dieses Signal dann auf einem Heimvideorecorder aufzuzeichnen.

In der nachveröffentlichten DE-OS 33 15 740 ist vorgeschlagen, das digitale Videotextsignal ohne Modulation über einen zusätzlichen Signalweg und einen Schalter anstelle des Bildträgers den Aufzeichnungsköpfen zuzuführen.

- 4 -

Die Aufgabe der Erfindung besteht darin, eine einfache Möglichkeit zu schaffen, digitale Signale, insbesondere Videotextinformationen, auf Heimvideorecordern aufzuzeichnen.

Diese Aufgabe wird nach der vorliegenden Erfindung durch die im kennzeichnenden Teil des Anspruchs 1 angegebenen Maßnahmen gelöst.

Die Vorteile der Erfindung bestehen darin, daß es einfach und preiswert möglich wird, auf einen Heimvideorecorder digitale Signale, insbesondere Videotextinformationen, aufzuzeichnen.

- 5 -

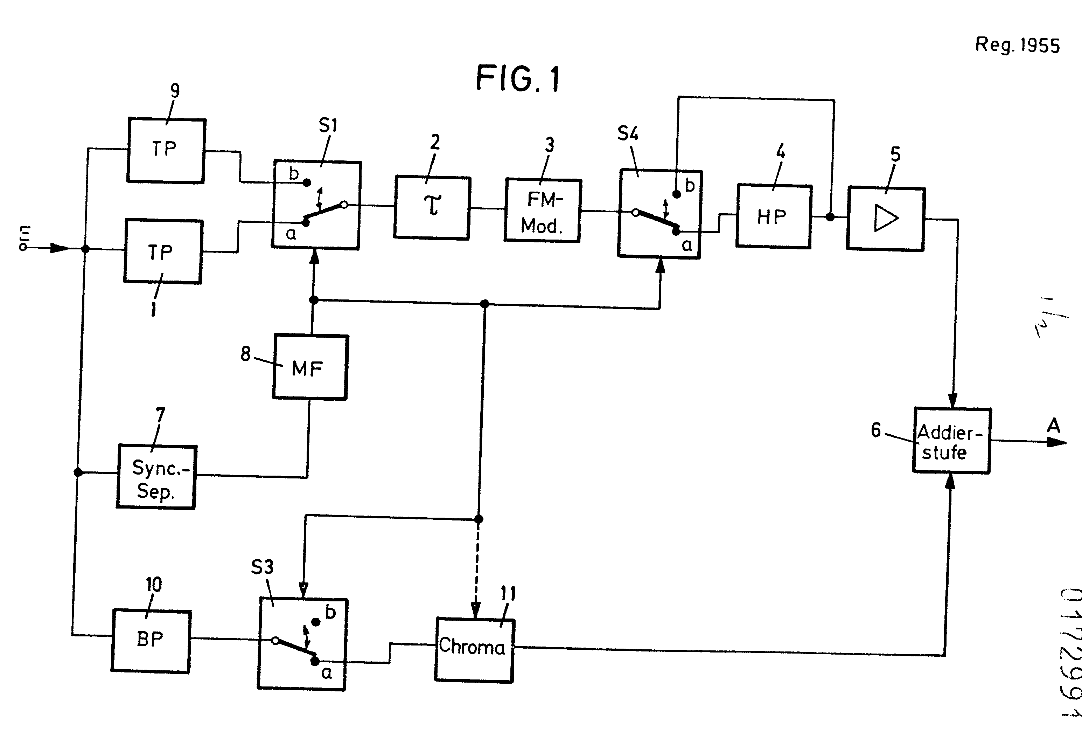

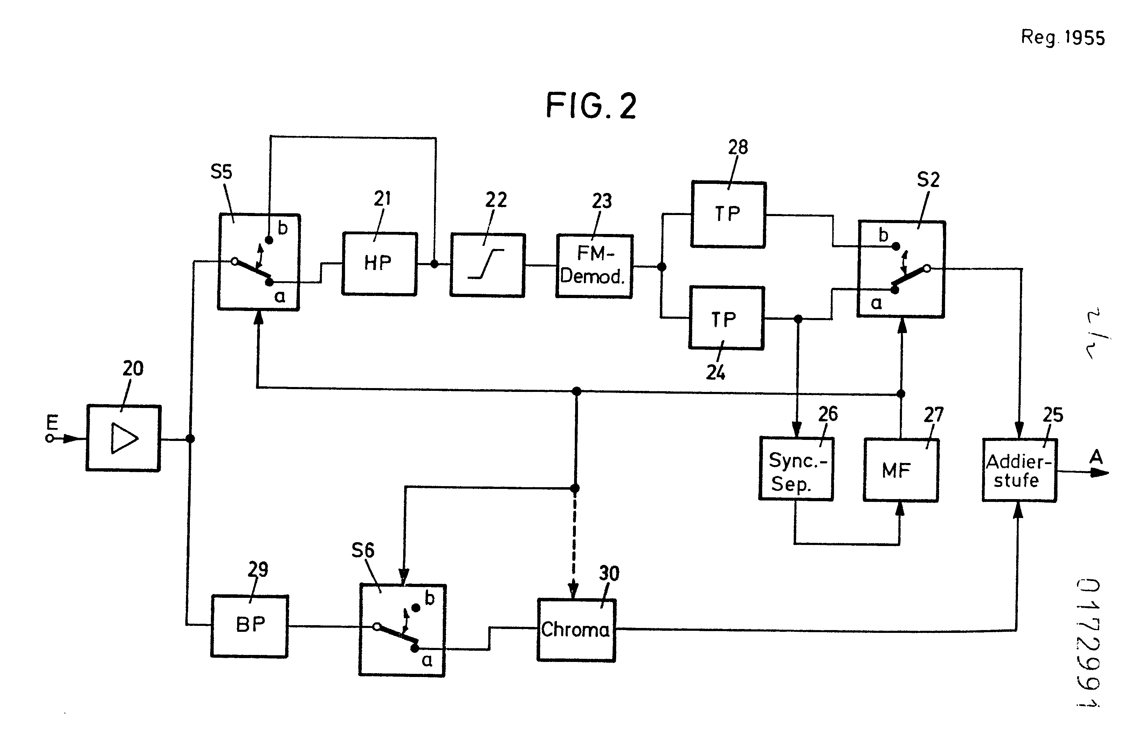

Im folgenden wird die Erfindung anhand eines Ausführungsbeispiels näher erläutert. Figur 1 zeigt ein Ausführungsbeispiel für eine Aufzeichnungseinrichtung nach der vorliegenden Erfindung. Figur 2 zeigt ein Ausführungsbeispiel
für eine Wiedergabeeinrichtung nach der vorliegenden
Erfindung.

Dem Eingang E der Aufzeichnungseinrichtung gemäß Figur 1
wird ein zusammengesetztes Farbvideosignal zugeführt,
welches in bestimmten Zeilen der vertikalen Austastlücke
digitale Videotextinformation enthält. Ein Tiefpaßfilter 1
mit einer oberen Grenzfrequenz von etwa 3 MHz trennt aus
dem zusammengesetzten Farbvideosignal den Luminanzanteil
ab. Dieser gelangt über einen Schalter S1, der sich in
der Schaltstellung a befindet, an eine Verzögerungsstufe 2,
deren Aufgabe darin besteht, die Signallaufzeit im Luminanzkanal an die Signallaufzeit im Chrominanzkanal anzupassen.
Vom Ausgang der Verzögerungsstufe 2 wird das Luminanzsignal an einen Frequenzmodulator 3 geführt und dort einem
Träger aufmoduliert, dessen Hubbereich so gewählt wird,
daß die Momentanfrequenz für den Weißpegel größer ist als
die obere Grenzfrequenz der digitalen Videotextinformation.
In diesem Ausführungsbeispiel sei für die Momentanfrequenz
des Weißpegels 6,0 MHz gewählt. Das frequenzmodulierte
Luminanzsignal wird über einen Schalter S4, der sich in
der Schaltstellung a befindet, und über ein Hochpaßfilter 4,
das unerwünschte Frequenzanteile ausfiltert, und über eine

- 11 -

Verstärkerstufe 5 einer Additionsstufe 6 zugeführt und dort mit den Ausgangssignalen des Chrominanzkanals vereinigt.

Das am Eingang E der Aufzeichnungseinrichtung anliegende zusammengesetzte Farbvideosignal wird ferner einem Synchronsignalseparator 7 zugeführt, der die Vertikalsynchronimpulse aus dem zusammengesetzten Farbvideosignal abtrennt. Diese stoßen ein Monoflop 8 an, das für genau diejenigen Zeitintervalle der Vertikalaustastlücke, in denen die digitale Videotextinformation übertragen wird, den Schalter S1 in die Schaltstellung b bringt. Damit kann die digitale Videotextinformation über das Tiefpaßfilter 9, dessen obere Grenzfrequenz bei 5 MHz liegt, und den Schalter S1 an die Verzögerungsstufe 2 und von dort dem FM-Modulator 3 zur Frequenzmodulation zugeführt werden. Ferner bewirkt das Ausgangssignal des Monoflops 8 eine Umschaltung des Schalters S4 von der Schaltstellung a in die Schaltstellung b. Damit gelangt das Ausgangssignal des FM-Modulators 3 direkt in den Verstärker 5, wobei das Hochpaßfilter 4 überbrückt wird, und von dort zur Addierstufe 6.

Das Chrominanzsignal wird aus dem zusammengesetzten Farbvideosignal mittels eines Bandfilters 10 abgetrennt, passiert einen Schalter S3, der sich außerhalb der den Videotextsignalen entsprechenden Zeitintervalle in der Schaltstellung a befindet und wird anschließend in einer Chrominanzsignalverarbeitungsstufe 11 in einen Frequenzbereich umgesetzt, der unterhalb des Frequenzbereichs des frequenzmodulierten Luminanzsignals liegt. Das frequenzumgesetzte Chrominanzsignal und das frequenzmodulierte
Luminanzsignal werden in der Addierstufe 6 zusammengefaßt
und auf Schrägspuren eines Magnetbandes aufgezeichnet.

Während der Zeitintervalle, in denen Videotextsignale übertragen werden, befindet sich der vom Ausgangssignal des
Monoflops 8 gesteuerte Schalter S3 in der Schaltstellung b.
Damit gelangt während dieser Zeitintervalle keine den
Chrominanzkanal durchlaufende Information an die Addierstufe 6.

An welcher Stelle der Chrominanzkanal gesperrt wird, ist
für die vorliegende Erfindung ohne Belang. Beispielweise
kann das Ausgangssignal des Monoflops 8 auch auf die in
jedem Heimvideorecorder vorgesehene Farbsperrschaltung in
der Chrominanzsignalverarbeitungsstufe 11 einwirken, was
in Figur 1 gestrichelt angedeutet ist.

Somit werden außerhalb der für die Übertragung der digitalen Signale benutzten Zeilenintervalle das frequenzmodulierte Luminanzsignal und das frequenzumgesetzte
Chrominanzsignal und während der für die Übertragung
der digitalen Signale benutzten Zeilenintervalle in der
vertikalen Austastlücke die Videotextinformationen aufgezeichnet. Dabei wird während der erstgenannten Zeilenintervalle eine herkömmliche Colour-Under-Aufzeichnung durchgeführt und während der zweitgenannten Zeilenintervalle in der vertikalen Austastlücke für die Aufzeichnung der Videotextinformationen eine höhere Aufzeichnungsbandbreite für die den Luminanzkanal durchlaufenden Signale bei gleichzeitiger Sperrung des Chrominanzkanals zur Verfügung gestellt.

Da bereits bei den Heimvideorecordern nach dem Stand der Technik ein Synchronsignalseparator nötig ist, mit dessen Hilfe der Vertikalsynchronimpuls aus dem zusammengesetzten Farbvideosignal (beispielsweise zur Servoregelung) abgetrennt wird, benötigt der Heimvideorecorder nach der vorliegenden Erfindung zur Aufzeichnung von digitalen Datensignalen als zusätzliche Bauteile lediglich ein Tiefpaßfilter, ein Monoflop und Schalter. Damit ist es auf einfache und preiswerte Weise möglich, digitale Signale, insbesondere Videotextinformationen, auf Magnetband aufzuzeichnen.

Dem Eingang E der Wiedergabeeinrichtung gemäß Figur 2 wird das aus den Schrägspuren des Magnetbandes ausgelesene Signal zugeführt. Dieses wird zunächst in einem Wiedergabeverstärker 20 verstärkt und gelangt dann durch einen Schalter S5, der sich außerhalb der den Videotextsignalen entsprechenden Zeitintervalle in der Schaltstellung a befindet, an einen Hochpaß 21, mit dessen Hilfe das frequenzmodulierte Luminanzsignal aus dem wiedergegebenen Signal abgetrennt wird.

Das Ausgangssignal des Hochpaßfilters 21 wird in einem Begrenzer 22 begrenzt und anschließend in einem FM-Demodulator 23 demoduliert. Das demodulierte Luminanzsignal gelangt über ein Tiefpaßfilter 24 mit einer oberen Grenzfrequenz von 3 MHz und einen Schalter S2, der sich in der Schaltstellung a befindet, an den Addierer 25 zur Addition mit dem wiedergewonnenen frequenzrückumgesetzten Chrominanzanteil.

An den Ausgang des Tiefpaßfilters 24 ist ferner eine Synchronsignalabtrennstufe 26 angeschlossen, mit deren Hilfe der Vertikalsynchronimpuls aus dem wiedergegebenen Luminanzsignal abgetrennt wird. Dieser stößt ein Monoflop 27 an, welches für genau diejenigen Zeitintervalle der Vertikalaustastlücke, die den digitalen Videotextinformationen entsprechen, den Schalter S2 in seine Schaltstellung b bringt. Damit können während dieser Zeitintervalle die wiedergegebenen, demodulierten Videotextinformationen über das Tiefpaßfilter 28, das eine Bandbreite von 5 MHz hat, und den Schalter S2 zum Addierer 25 geführt werden. Ferner bewirkt das Ausgangssignal des Monoflops 27 eine Umschaltung des Schalters S5 von der Schaltstellung a in die Schaltstellung b. Damit gelangt das Ausgangssignal des Wiedergabeverstärkers 20 in den den Videotextsignalen entsprechenden Zeitintervallen direkt zum Begrenzer 22, wobei das Hochpaßfilter 21 überbrückt wird.

Die Abtrennung des Chrominanzanteils aus dem vom Band wiedergegebenen, verstärkten Signal erfolgt mittels eines Bandpasses 29. Das Ausgangssignal des Bandpasses 29 gelangt über einen Schalter S6, der sich außerhalb der den Videotextsignalen entsprechenden Zeitintervalle in der Schaltstellung a befindet, an eine Chrominanzsignalverarbeitungsstufe 30, in der das wiedergegebene, verstärkte Chrominanzsignal in seinen ursprünglichen Frequenzbereich frequenzrückumgesetzt wird. Das frequenzrückumgesetzte Chrominanzsignal und das demodulierte Luminanzsignal werden im Addierer 25 addiert und dem Ausgang A der Wiedergabevorrichtung zugeführt.

Während der Zeitintervalle, in denen Videotextsignale übertragen werden, befindet sich der vom Ausgangssignal des Monoflops 27 gesteuerte Schalter S6 in der Schaltstellung b. Damit gelangt während dieser Zeitintervalle keine den Chrominanzkanal durchlaufende Information an die Addierstufe 25.

An welcher Stelle der Chrominanzkanal gesperrt wird, ist für die vorliegende Erfindung ohne Belang. Beispielweise kann das Ausgangssignal des Monoflops 27 auch auf die in jedem Heimvideorecorder vorgesehene Farbsperrschaltung in der Chrominanzsignalverarbeitungsstufe 30 einwirken, was in Figur 2 gestrichelt angedeutet ist.

Bei der vorliegenden Erfindung wird somit während derjenigen Zeitintervalle, in denen die digitalen Signale, insbesondere Videotextinfomationen, und keine Chrominanzanteile übertragen werden, eine größere Bandbreite für die den Luminanzkanal durchlaufenden Signale bei gleichzeitiger Sperrung des Chrominanzkanals zur Verfügung gestellt. Folglich können ohne gegenseitige Beeinflussung Farbvideosignal und digitales Signal, insbesondere Videotextsignal, auf Magnetband aufgezeichnet werden.

Die vorliegende Erfindung ist nicht auf die gezeigten Ausführungsbeispiele beschränkt. Beispielsweise können die beschriebenen Tiefpaß- und Hochpaßfilter durch andere frequenzbandbegrenzende Einrichtungen (z.B. Saugkreise) ersetzt sein. Auch kann beispielsweise das Tiefpaßfilter 4 unter Inkaufnahme von Qualitätseinbußen völlig weggelassen werden. Ferner sind die digitalen Datensignale nicht auf in der Vertikalaustastlücke übertragene Videotextinformationen beschränkt. Auch die Erzeugung des Steuersignals für die gezeigten Schalter ist auf vielerlei Art und Weise möglich.

# VERFAHREN UND EINRICHTUNG ZUR AUFZEICHNUNG UND WIEDERGABE VON FARBVIDEOSIGNALEN MIT DATENZEILEN

## PATENTANSPRÜCHE

1.   Verfahren zur Aufzeichnung und Wiedergabe von Farbvideosignalen mit Datenzeilen, wobei die obere Grenzfrequenz der digitalen Datensignale innerhalb der Datenzeilen die durch frequenzbandbegrenzende Einrichtungen bestimmte Grenzfrequenz der Luminanzanteile der Farbvideosignale überschreitet, und wobei die Luminanzanteile der Farbvideosignale frequenzmoduliert aufgezeichnet werden, dadurch gekennzeichnet, daß

- der für die Frequenzmodulation des Luminanzsignals gewählte Hubbereich so gewählt wird, daß die Momentanfrequenz für den Weißpegel größer ist als die obere Grenzfrequenz der digitalen Signale,

- die frequenzbandbegrenzenden Einrichtungen im Luminanzkanal für die Zeit, in der die digitalen Datensignale eintreffen, auf eine höhere Durchlaßbandbreite umgeschaltet werden, und

- der Chrominanzkanal für die Zeit, in der die digitalen
Datensignale eintreffen, gesperrt wird.

2. Verfahren nach Anspruch 1, dadurch gekennzeichnet, daß die digitalen Signale Videotextinformationen sind.

3. Einrichtung zur Aufzeichnung eines Farbvideosignals nach dem Verfahren gemäß Anspruch 1 oder 2, mit
- einem Tiefpaßfilter zur Abtrennung des Luminanzanteils
aus dem Farbvideosignal,
- einer Verzögerungsstufe zur Verzögerung des Luminanzanteils,
- einem Frequenzmodulator zur Frequenzmodulation des
Luminanzanteils,
- einem Verstärker zur Verstärkung des frequenzmodulierten Luminanzanteils,
- einem Bandpaßfilter zur Abtrennung des Chrominanzanteils
aus dem Farbvideosignal,
- einer Chrominanzsignalverarbeitungsstufe zur Frequenzumsetzung des Chrominanzanteils in einen unterhalb des
frequenzmodulierten Luminanzsignalbereiches liegenden
Frequenzbereich und
- einer Addierstufe zur Addition von frequenzmoduliertem
Luminanzanteil und frequenzumgesetztem Chrominanzanteil,

0172991

gekennzeichnet durch

- ein dem Tiefpaßfilter (1) parallel geschaltetes zweites
  Tiefpaßfilter (9), dessen obere Grenzfrequenz höher ist
  als die des ersten Tiefpaßfilters (1),

- einen Schalter (S1), der entweder das Tiefpaßfilter (1)
  oder das Tiefpaßfilter (9) mit der Verzögerungsstufe (2)
  verbindet,

- und eine Stufe (7,8), die den Schalter (S1) derart steuert, daß in den den digitalen Signalen entsprechenden
  Zeitintervallen das Tiefpaßfilter (9) und in den übrigen
  Zeitintervallen das Tiefpaßfilter (1) wirksam geschaltet
  wird, und die in den den digitalen Signalen entsprechenden
  Zeitintervallen die Sperrung des Chrominanzkanals auslöst.

4.    Einrichtung nach Anspruch 3, dadurch gekennzeichnet, daß die Stufe (7, 8) auf einen Schalter (S3) einwirkt,
der vor der Chrominanzsignalverarbeitungsstufe (11) angeordnet ist.

5.    Einrichtung nach Anspruch 3, dadurch gekennzeichnet, daß die Stufe (7, 8) auf eine Chrominanzsperrstufe in
der Chrominanzsignalverarbeitungsstufe (11) einwirkt.

6.    Einrichtung nach einem oder mehren der Ansprüche 3 bis 5, mit einem zwischen FM-Modulator (3) und Verstärker (5) geschalteten Hochpaßfilter (4), gekennzeichnet durch einen Schalter (S4), mit dessen Hilfe das Hochpaßfilter (4) in den den digitalen Signalen entsprechenden Zeitintervallen überbrückt wird.

7.    Einrichtung nach Anspruch 6, dadurch gekennzeichnet, daß der Schalter (S4) vom Ausgangssignal der Stufe (7, 8) gesteuert wird.

8.    Einrichtung zur Wiedergabe eines Farbvideosignals nach dem Verfahren gemäß Anspruch 1 oder 2, mit

- einem Wiedergabeverstärker,

- einem Hochpaßfilter zur Abtrennung des frequenzmodulierten Luminanzanteils aus dem wiedergegebenen Signal,

- einem Begrenzer zur Begrenzung des wiedergegebenen frequenzmodulierten Luminanzanteils,

- einem Frequenzdemodulator zur Demodulation des wiedergegebenen frequenzmodulierten Luminanzanteils,

- einem Tiefpaßfilter zur Tiefpaßfilterung des frequenzdemodulierten Luminanzanteils,

- einem Bandpaßfilter zur Abtrennung des frequenzumgesetzten Chrominanzanteils aus dem wiedergegebenen Signal,

- einer Chrominanzsignalverarbeitungsstufe zur Frequenzrückumsetzung des Chrominanzanteils in seinen ursprünglichen Frequenzbereich,

- und einer Addierstufe zur Addition des frequenzdemodulierten Luminanzanteils und des frequenzrückumgesetzten Chrominanzanteils,

gekennzeichnet durch

- ein dem Tiefpaßfilter (24) parallelgeschaltetes Tiefpaßfilter (28), dessen obere Grenzfrequenz höher ist als die des Tiefpaßfilters (24),

- einen Schalter (S2), der entweder das Tiefpaßfilter (24) oder das Tiefpaßfilter(28) mit der Addierstufe (25) verbindet,

- eine Stufe (26, 27), die den Schalter (S2) derart steuert, daß in den den digitalen Signalen entsprechenden Zeitintervallen das Tiefpaßfilter (28) und in den übrigen Zeitintervallen das Tiefpaßfilter (24) wirksam geschaltet wird und die in den den digitalen Signalen entsprechenden Zeitintervallen die Sperrung des Chrominanzkanals auslöst, und

- einen Schalter (S5), mit dessen Hilfe das Hochpaßfilter (21) in den den digitalen Signalen entsprechenden Zeitintervallen überbrückt wird.

9. Einrichtung nach Anspruch 8, dadurch gekennzeichnet, daß der Schalter (S5) von der Stufe (26, 27) gesteuert wird.

10. Einrichtung nach Anspruch 8, dadurch gekennzeichnet, daß die Stufe (26, 27) auf einen Schalter (S6) einwirkt, der vor der Chrominanzsignalverarbeitungsstufe (30) angeordnet ist.

11. Einrichtung nach Anspruch 8, dadurch gekennzeichnet, daß die Stufe (26, 27) auf eine Chrominanzsperrstufe in der Chrominanzsignalverarbeitungsstufe (30) einwirkt.

Beschreibung

FIG. 1

Reg. 1955

# FIG. 2